# EUROPÄISCHE PATENTANMELDUNG

(11) **EP 3 391 950 A1**
(43) Veröffentlichungstag der Anmeldung: **24.10.2018**
(21) Anmeldenummer: 18177625.3
(22) Anmeldetag: 25.03.2010
(51) Int. Cl.: B01D 35/18, F02M 37/22, B01D 36/00, B01D 27/08

(54) **FILTEREINRICHTUNG FÜR FLUIDE, INSBESONDERE FÜR KRAFTSTOFFE**

(30) Priorität: 08.04.2009 DE 102009016601
(62) Teilanmeldung aus: 10157668.4
(71) Anmelder: Mann+Hummel GmbH, 71636 Ludwigsburg (DE)
(72) Erfinder: JOKSCHAS, Günter, 71540 Murrhardt (DE); MUSCHKIET, Frank, 96515 Sonneberg (DE); FASOLD, Michael, 71549 Auenwald (DE); KRAFT, Gunther, 71642 Ludwigsburg (DE); UHL, Stefan, 70736 Fellbach (DE); FRIEDERICH, Thomas, 71739 Oberriexingen (DE); KRAUß, Oliver, 74189 Weinsberg (DE)
(74) Vertreter: Seyboth, Matthias

(57) **Zusammenfassung**

Eine Filtereinrichtung für Fluide weist ein in einem Filtergehäuse angeordnetes Filterelement und eine im Strömungsweg des Fluids angeordnete Heizeinrichtung auf. Die Heizeinrichtung umfasst ein Heizelement, das an einem Heizungsträger gehalten ist, welcher an der Deckelinnenseite angeordnet ist, wobei einteilig mit dem Heizungsträger ein Wasserauslassstutzen ausgebildet ist, der durch eine Ausnehmung im Deckel nach außen geführt ist.

## Beschreibung

### Technisches Gebiet

Die Erfindung bezieht sich auf eine Filtereinrichtung für Fluide, insbesondere für Kraftstoffe in einer Brennkraftmaschine, nach dem Oberbegriff des Anspruches 1.

### Stand der Technik

In der DE 10 2006 034 077 A1 wird ein Flüssigkeitsfilter beschrieben, der mit einer Heizung zum Erwärmen des die Filtereinrichtung durchströmenden Mediums ausgestattet ist. Die Heizung ist als eine Heizbahn gestaltet, die elektrisch beheizbar ist und in das Filtergehäuse eingespritzt ist. Die Heizbahn ist in die Wandung des topfförmigen Filtergehäuses integriert und umgreift das Filterelement ringförmig an dessen Außenseite, die die Rohseite darstellt, so dass das zur Rohseite gelangende Fluid von der Heizbahn erwärmt wird.

Aus der EP 0 162 939 A1 ist eine Heizeinrichtung für Dieselkraftstoff eines Verbrennungsmotors bekannt, die als Heizelemente PTC-Elemente aufweist, welche an der Stirnseite des Gehäuses angeordnet sind. Die PTC-Elemente befinden sich an einem Deckel des Gehäuses, durch den auch die Zuströmung und Abströmung des Dieselkraftstoffes erfolgt. Der auf die Stirnseite des topfförmigen Gehäuses aufsetzbare Deckel weist zur Strömungsführung einen Strömungsraum zwischen einer außen liegenden und einer innen liegenden Deckelschale auf, wobei die PTC-Elemente auf der dem Gehäusetopf zugewandten Seite der inneren Gehäuseschale angeordnet sind.

Der Erfindung liegt die Aufgabe zugrunde, mit einfachen konstruktiven Maßnahmen eine Filtereinrichtung für Fluide bei kompakter Bauweise so auszuführen, dass eine rasche Erwärmung des Fluids bei vereinfachter Montage und Wartung gewährleistet ist.

### Offenbarung der Erfindung

Diese Aufgabe wird erfindungsgemäß mit den Merkmalen des Anspruches 1 gelöst. Die Unteransprüche geben zweckmäßige Weiterbildungen an.

Die erfindungsgemäße Filtereinrichtung kann allgemein für die Filtration von Fluiden eingesetzt werden, insbesondere von Flüssigkeiten, wobei grundsätzlich auch ein Einsatz für gasförmige Fluide in Betracht kommt. In bevorzugter Ausführung wird die Filtereinrichtung für die Filtration von Kraftstoffen in Brennkraftmaschinen eingesetzt. Insbesondere ist die Filtereinrichtung zur Erwärmung und Filtration von Dieselkraftstoff geeignet.

Die Filtereinrichtung weist in einem Filtergehäuse ein Filterelement auf, welches von dem Fluid zu durchströmen ist. Um das Fluid vor der Filtration zu erwärmen, ist stromauf des Filterelementes eine Heizeinrichtung im Strömungsweg des Fluids angeordnet, über die ein Wärmeeintrag in das Fluid erfolgt. Die Heizeinrichtung befindet sich an der der Innenseite eines das vorzugsweise topfförmige Filtergehäuse verschließenden Deckels.

Die Heizeinrichtung umfasst ein Heizelement, das an einem Heizungsträger gehalten ist, welcher an der Deckelinnenseite angeordnet ist. Einteilig mit dem Heizungsträger ist ein Wasserauslassstutzen ausgebildet, der mit einem Entwässerungskanal im Filtergehäuse kommuniziert, wobei der Entwässerungskanal mit dem Heizungsträger verbunden ist. Der Wasserauslassstutzen ist durch eine Ausnehmung im Deckel nach außen geführt.

Dem Heizungsträger kommen in dieser Ausführung zusätzliche Funktionen zu. Zum einen ist an dem Heizungsträger nicht nur das Heizelement angeordnet, sondern auch der Entwässerungskanal, über den abgeschiedenes Wasser aus der Filtereinrichtung abgeleitet werden kann. Zum andern ist der Wasserauslassstutzen einteilig mit dem Heizungsträger ausgebildet, der mit dem Entwässerungskanal strömungsverbunden ist, wobei auf Grund der Einteiligkeit von Wasserauslassstutzen und Heizungsträger ein kompaktes, klein bauendes Bauteil erreicht wird. Der Heizungsträger kann als vorgefertigtes Modul, das auch den Entwässerungskanal umfasst, in das topfförmige Filtergehäuse eingesetzt werden, woraufhin der Deckel in der Weise aufgesetzt wird, dass der Wasserauslassstutzen durch die Ausnehmung im Deckel hindurchragt. Auf diese Weise ist der Heizungsträger einschließlich der daran gehalten Bauteile - Heizelement, Wasserauslassstutzen und Entwässerungskanal - als vorgefertigtes Modul in einfacher Weise in das Filtergehäuse einzusetzen, wobei mit dem Aufsetzen des Deckels zugleich der Heizungsträger sicher fixiert wird.

Gemäß einer zweckmäßigen weiteren Ausführung ist vorgesehen, dass elektrische Kontaktpins mit dem Heizungsträger und einem Wasserstandssensor verbunden und durch eine Ausnehmung im Deckel hindurchgeführt sind. Die Kontaktpins dienen insbesondere zum elektrischen Anschluss eines in der Filtereinrichtung verbauten Wasserstandssensors, mit dem der Wasserstand abgeschiedenen Wassers im Filtergehäuse zu messen ist. Der Wasserstandssensor befindet sich vorzugsweise in oder an dem Entwässerungskanal. Dem Heizungsträger kommt daher die weitere Funktion zu, sowohl die Kontaktpins als auch - über den Entwässerungskanal - den Wasserstandssensor aufzunehmen. Der Heizungsträger ist somit Träger des Wasserauslassstutzens, des Entwässerungskanals, der elektrischen Kontaktpins und des Wasserstandssensors. Dieses Modul wird bei der Montage in das Filtergehäuse eingebaut und mit dem Verschließen des Deckels im Filtergehäuse an der gewünschten Position gesichert. Zum Ausgleich von Bauteil- und Fertigungstoleranzen ist zwischen Filterelement und dem Filtergehäuseboden ein Federelement angeordnet, das für eine kraftschlüssige Anlage des Moduls am Deckel sorgt. Zugleich ist mit dem Aufsetzen des Deckels der elektrische Anschluss an die Kontaktpins sowie der Strömungsanschluss an den Wasserauslassstutzen in einfacher Weise durchzuführen.

Gemäß einer weiteren vorteilhaften Ausführung sind auch ein Fluid-Eintrittsstutzen sowie ein Fluid-Austrittsstutzen mit dem Heizungsträger verbunden und durch Ausnehmungen im Deckel hindurchgeführt, wobei über den Fluid-Eintritts- und den Fluid-Austrittsstutzen das zu reinigende bzw. bereits gereinigte Fluid in die Filtereinrichtung ein- bzw. aus dieser abgeführt wird. Insgesamt sind somit in den Deckel mehrere Ausnehmungen eingebracht, durch die der Wasserauslassstutzen, die Kontaktpins, der Fluid-Eintrittsstutzen und der Fluid-Austrittsstutzen hindurchragen. Auf diese Weise erfolgen sämtliche Anschlüsse über die Stirnseite der Filtereinrichtung im Bereich des Deckels. Darüber hinaus sind keine weiteren Anschlüsse erforderlich.

Des Weiteren ist es zweckmäßig, am Entwässerungskanal und ggf. auch am Auslassstutzen Dichtlippen anzuformen, die mit angrenzenden Bauteilen in Dichtkontakt stehen. Im Falle des Entwässerungskanals wird eine Abdichtung zu einem das Filterelement tragenden Mittelrohr erreicht, im Falle des Auslassstutzens eine Abdichtung gegenüber dem Heizungsträger und/oder einem mit dem Entwässerungskanal verbundenen Bauteil. Somit können auch am Entwässerungskanal und am Auslassstutzen zusätzliche Dichtelemente entfallen.

Der Heizungsträger ist bevorzugt als ein Kunststoffteil ausgeführt, gleiches gilt für die einteilig mit dem Heizungsträger ausgeführten Bauteile, beispielsweise den Wasserauslassstutzen. Auch der Entwässerungskanal ist vorteilhafterweise als Kunststoffteil ausgeführt.

Die Heizeinrichtung umfasst vorteilhafterweise eine Wärmeleitplatte sowie ein Heizelement, welches die Wärmeleitplatte erwärmt. Das Fluid wird an der Wärmeleitplatte entlang geführt, so dass der Wärmeeintrag in das Fluid über die Wärmeleitplatte erfolgt.

Diese Ausführung hat verschiedene Vorteile. Zum einen ist ein großflächiger Kontakt zwischen der Wärmeleitplatte und dem Fluid möglich, wodurch eine rasche Erwärmung des Fluids gewährleistet ist. Zum andern kann auch die Wärmeleitplatte an sich von dem Heizelement schnell erwärmt werden, so dass die Zeitdauer der Erwärmung vom Heizelement zur Wärmeleitplatte und weiter von der Wärmeleitplatte zum Fluid in kürzerer Zeit erfolgt.

Des Weiteren lassen sich derartige Wärmeleitplatten in einfacher Weise herstellen, insbesondere aus elektrisch leitfähigem Material, beispielsweise aus Metall, so dass die Wärmeleitplatten auch zur Stromführung genutzt werden können. Insbesondere für den Fall, dass zwei parallel zueinander angeordnete Wärmeleitplatten vorgesehen sind, kann über die Wärmeleitplatten ein geschlossener Stromkreislauf zu dem Heizelement realisiert werden. Dieses befindet sich in bevorzugter Ausführung für den Fall mehrerer Wärmeleitplatten im Zwischenraum zwischen den Platten.

Grundsätzlich ist aber eine einzelne Wärmeleitplatte, der ein Heizelement zugeordnet ist, ausreichend für den Wärmeeintrag in das Fluid. Zweckmäßigerweise bilden beide Seitenflächen der Wärmeleitplatte Strömungs- bzw. Heizflächen für das Fluid, das dementsprechend an beiden Seiten der Wärmeleitplatte entlang geleitet wird.

Gemäß bevorzugter Ausführung sind mindestens zwei parallele Wärmeleitplatten angeordnet, die einen zwischenliegenden Strömungsraum begrenzen. Damit besteht die Möglichkeit, dass das zu erwärmende Fluid an beiden Außenseiten sowie im Zwischenraum entlang geführt wird und dementsprechend trotz begrenzter Dimension der Wärmeleitplatte eine verhältnismäßig große Heizfläche zur Verfügung steht. In dieser so genannten Sandwich-Bauweise dienen zweckmäßigerweise sämtliche Seitenflächen der Wärmeleitplatten als Strömungs- bzw. Heizflächen. Des Weiteren kann, wie bereits oben erwähnt, das mindestens eine Heizelement im Zwischenraum positioniert werden, wobei die Stromzufuhr zu dem Heizelement zweckmäßigerweise über die aus elektrischem Material gefertigten Wärmeleitplatten erfolgt.

Gemäß weiterer vorteilhafter Ausführung ist in die Wärmeleitplatte eine Strömungsöffnung eingebracht, durch die das zu erwärmende Fluid hindurchströmen kann. Über die Strömungsöffnung ist ein Übertritt des Fluids zwischen den axialen Seitenflächen der Wärmeleitplatte möglich. Die Strömung wird durch Umlenkungen im Bereich der Wärmeleitplatten an den verschiedenen Seitenflächen der Wärmeleitplatte vorbeigeleitet.

Die Wärmeleitplatte ist insbesondere kreis- oder ringförmig und in sich eben ausgebildet, so dass in Sandwich-Bauweise eine zylindrische bzw. hohlzylindrische Ausführung der Heizeinrichtung mit einem zwischen den parallelen und konzentrisch zueinander angeordneten Wärmeleitplatten liegenden Heizelement gegeben ist. In dieser Ausführung ist die Heizeinrichtung zweckmäßigerweise an einer Stirnseite des vorzugsweise topfförmigen Filtergehäuses angeordnet, insbesondere im Deckelbereich, mit dem die Heizeinrichtung auch verbunden werden kann.

Daneben ist aber auch eine Ausführung mit gekrümmten Wärmeleitplatten möglich, wobei im Falle von einer Mehrzahl von Wärmeleitplatten diese zweckmäßigerweise konzentrisch zueinander angeordnet sind, um einen zwischenliegenden Strömungsraum für das zu erwärmende Fluid zu begrenzen. Beispielsweise können die Wärmeleitplatten hohlzylindrisch ausgebildet sein und das ebenfalls hohlzylindrische Filterelement ringförmig mit radialem Abstand zur Anströmseite des Filterelementes umgreifen.

Bei einer scheiben- bzw. ringförmigen, ebenen Ausführung der Wärmeleitplatte kommt insbesondere eine Anordnung an der Innenseite des Deckels des topfförmigen Filtergehäuses in Betracht, über den das zu reinigende Fluid axial in das Gehäuseinnere eingeleitet wird. Das Fluid durchströmt zunächst die Heizeinrichtung, die in dieser Ausführung vorzugsweise aus zwei parallelen Wärmeleitplatten mit mindestens einem zwischen liegenden Heizelement besteht, und wird im Anschluss an die Erwärmungsphase zur radialen Außenseite des Filterelementes geleitet, welches radial von außen nach innen durchströmt wird. Die Ableitung des gereinigten Fluids erfolgt danach über den Innenraum des Filterelements in Achsrichtung.

Die gesamte Filtereinrichtung kann als Wegwerfteil konzipiert werden, bei dem der auf den Filtertopf aufgesetzte Gehäusedeckel fest mit dem Filtertopf verbunden wird, beispielsweise durch Umbördeln des Deckelrands. Die scheibenförmigen Wärmeleitplatten befinden sich zweckmäßigerweise zwischen der axialen Stirnseite des zylindrischen Filterelementes und der Innenseite des Gehäusedeckels. Sowohl Filtertopf als auch Filterdeckel können als Metallteile ausgeführt sein, die miteinander dicht verbunden sind (gebördelt, ggf. auch gelötet oder geschweißt). Die Filtereinrichtung bildet vorteilhafterweise eine untrennbare Einheit aus Filtertopf, Filterdeckel mit Filterelement, Heizeinrichtung, Wasserstandssensor, Wasseraustragsrohr, Fluideintrags- und Fluidaustragsrohr. Die elektrischen Kontakte und das Wasseraustragsrohr werden in einem Kunststoffteil durch eine Öffnung durch den Deckel geführt und mit einem Dichtring abgedichtet. Fluideintrags- und Austragsrohr sind mit dem Deckel verlötet. Die elektrischen Leiter für die zwei Kontakte für den Wasserfüllstandssensor sind in einem großen Bereich vom Kunststoff umspritzt und so voneinander isoliert.

Das Heizelement befindet sich vorzugsweise unmittelbar an einer der Seitenflächen der Wärmeleitplatte, wobei im Falle von zwei parallel angeordneten Wärmeleitplatten das Heizelement im Zwischenraum zwischen den Platten angeordnet ist. Es können für eine schnellere Erwärmung eine Mehrzahl von Heizelementen vorgesehen sein, die entweder an unterschiedlichen Seiten der Wärmeleitplatte oder an der gleichen Seite angeordnet sind.

Das Heizelement ist vorzugsweise scheibenförmig ausgebildet und als elektrisches PTC-Element (positiver Temperaturkoeffizient) ausgeführt.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
Fig. 1 einen Schnitt duch einen Kraftstofffilter mit einer an der Innenseite des Gehäusedeckels angeordneten Heizeinrichtung,
Fig. 1a eine vergrößerte Darstellung aus dem Kontaktbereich zwischen einem Entwässerungskanal und einem das Filterelement tragenden Mittelrohr,
Fig. 2 in vergrößerter Darstellung ein Ausschnitt aus dem Kraftstofffilter im Bereich des Deckels,
Fig. 3 die Heizeinrichtung, dargestellt mit einem Heizungsträger an der Deckelinnenseite,
Fig. 4 die Heizeinrichtung mit einer ersten Wärmeleitplate auf dem Heizungsträger,
Fig. 5 die Heizeinrichtung mit einer zweiten Wärmeleitplatte.

In den Figuren sind gleiche Bauteile mit gleichen Bezugszeichen versehen.

### Ausführungsform(en) der Erfindung

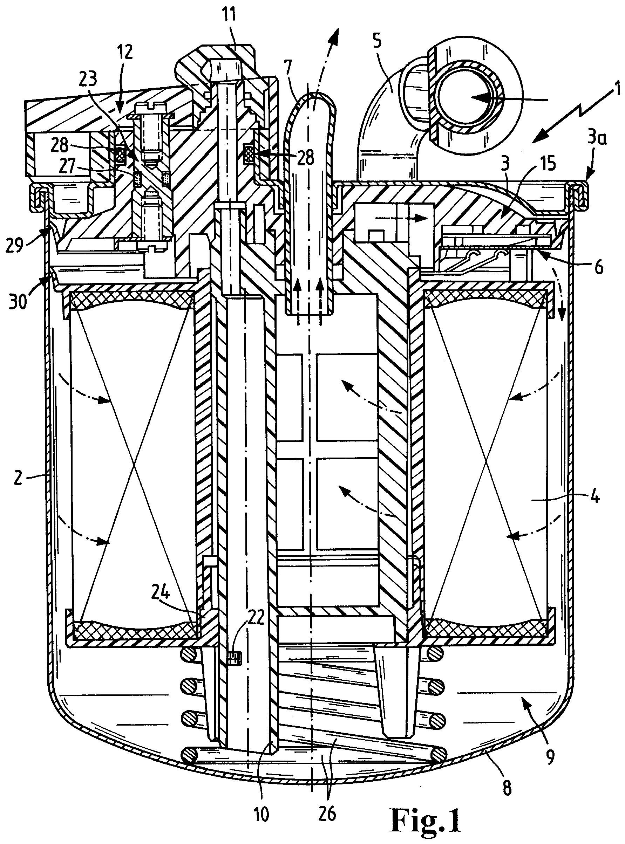

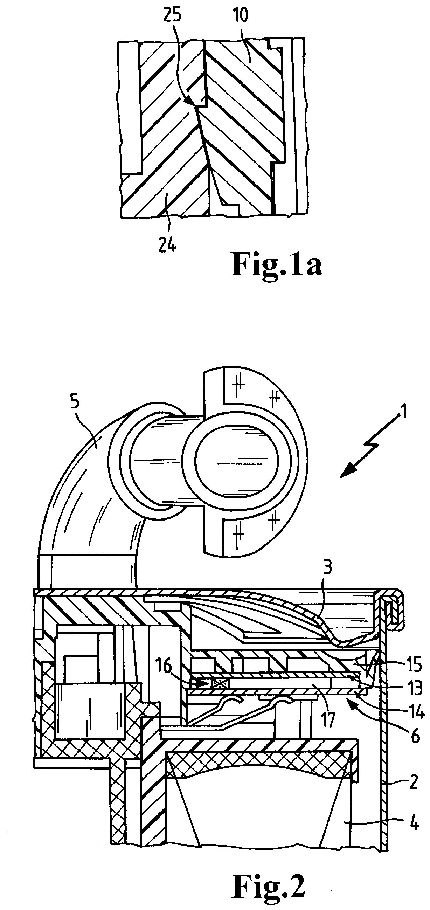

Bei der in Fig. 1 dargestellten Filtereinrichtung 1 handelt es sich um einen Kraftstofffilter, bestehend aus einem zylindrischen, topfförmigen Filtergehäuse 2 mit einem Gehäusedeckel 3 und einem in das Filtergehäuse 2 einsetzbaren, ringförmigen bzw. hohlzylindrische Filterelement 4, das mit einem innen liegenden, gerüstartigen Kunststoff-Mittelrohr 24 versehen ist. Am Gehäusedeckel 3, der mittels eines umgebördelten Randes 3a fest mit der axial freien Stirnseite des Filtergehäuses 2 zu verbinden ist, ist ein Einlassstutzen 5 für die Einleitung des zu reinigenden Fluids angeordnet. Das in das Gehäuseinnere geleitete Fluid wird in einer Heizeinrichtung 6 erwärmt und anschließend, wie mit den Pfeilen dargestellt, zur Außenseite des ringförmigen Filterelementes 4 geführt, die zugleich die Rohseite darstellt. Das erwärmte, ungereinigte Fluid wird anschließend in Radialrichtung von außen nach innen durch das Material des Filterelementes 4 geleitet und axial über einen Auslassstutzen 7 abgeleitet, der ebenfalls im Bereich des Deckels 3 angeordnet ist. Als Filtermaterial für das Filterelement 4 wird ein Filterpapier verwendet, wobei ebenso Vlies als Abscheidemedium oder eine Kombination verschiedener dem Fachmann geläufiger Filtermaterialien geeignet ist. Sowohl der Fluid-Einlassstutzen 5 als auch der Fluid-Auslassstutzen 7 sind durch Ausnehmungen im Deckel 3 hindurchgeführt. Aus- und Einlassstutzen für den Kraftstoff sind mit dem Deckel dicht verbunden, beispielsweise verlötet.

Zwischen dem Topfboden 8 und der axialen Unterseite des Filterelementes 4 befindet sich im Gehäuseinneren ein Wasseraufnahmeraum 9, in welchem sich abgeschiedenes Wasser ansammeln kann. In den Wasseraufnahmeraum 9 mündet ein Entwässerungskanal 10, der nach oben bis zu einem Wasserauslassstutzen 11 geführt und mit diesem strömungsverbunden ist. Über den Wasserauslassstutzen 11 kann das im Wasseraufnahmeraum 9 angesammelte Wasser ausgetragen werden. Der Wasserauslassstutzen 11 ragt durch eine Ausnehmung im Deckel 3 hindurch. Das abgeschiedene Wasser wird durch den Druck im Kraftstoffsystem ausgedrückt, sobald der Wasserauslassstutzen 11 oder eine daran befestigter Schlauch oder Leitungsabschnitt geöffnet wird. Dies ist ein Unterschied zu aus dem Stand der Technik bekannten Systemen mit Wasserablassschraube, bei denen das Wasser durch die Schwerkraft ausgetragen wird.

Des Weiteren ist an der Außenseite des Gehäusedeckels 3 ein Anschlussblock 12 angeordnet, der zur elektrischen Kontaktierung insbesondere der Heizeinrichtung 6 und des Wasserstandssensors 22 dient. Bestandteil des Anschlussblocks 12 sind Kontaktpins 23, die ebenfalls durch eine Ausnehmung im Deckel 3 hindurchgeführt sind. Über die aus Metall bestehenden Kontaktpins 23 erfolgt ein elektrischer Anschluss eines Wasserstandssensors 22, der im unteren Teil des Entwässerungskanals 10 angeordnet und über den der aktuelle Wasserstand im Wasseraufnahmeraum 9 detektierbar ist. Zur Herstellung eines elektrisch geschlossenen Stromkreises sind die beiden Kontaktpins 23 jeweils mit einem Leiter verbunden, wobei die beiden Leiter in die Wandung des Entwässerungskanals 10 eingespritzt sind und zu dem Sensor 22 führen, welcher zwei elektrische, jeweils einem Leiter zugeordnete Kontakte aufweist, die durch den ansteigenden Wasserspiegel elektrisch miteinander verbunden werden. Für die elektrische Versorgung von Heizeinrichtung 6 und dem Wasserstandssensor 22 sind insgesamt drei Kontaktpins vorgesehen, da der Nullleiter der zwei Einheiten zu einem Kontaktpin zusammengeführt werden kann.

Um jeden Kontaktpin 23 ist ein O-Ring 27 gelegt, über den eine strömungsdichte Abdichtung zu einem Heizungsträger 15 erreicht wird, in welchem die Kontaktpins 23 aufgenommen sind.

An der Deckelinnenseite befindet sich der aus Kunststoff gefertigter Heizungsträger 15, der Träger von Heizelementen 16 (Fig. 2) ist. Der Wasserauslassstutzen 11 ist separat vom Heizungsträger 15 ausgebildet, kann aber ggf. auch einteilig mit dem Heizungsträger 15 ausgebildet sein.

Der Fluid-Einlassstutzen 5 und der Fluid-Auslassstutzen 7 kommunizieren mit dem Heizungsträger 15, werden jedoch vom Deckel ausgebildet. Diese Stutzen können in einer alternativen Ausführungsform ebenfalls einteilig mit dem Heizungsträger ausgebildet sein. Des Weiteren ist auch der Entwässerungskanal 10 mit dem Heizungsträger 15 gekoppelt, wobei der Entwässerungskanal 10 als separates Bauteil ausgeführt ist. Gegebenenfalls ist es aber zweckmäßig, auch den Entwässerungskanal einteilig mit dem Heizungsträger auszuführen. Im Heizungsträger 15 befindet sich ein Kanal, der den Entwässerungskanal 10 mit dem Wasserauslassstutzen 11 verbindet. Um den oberen Abschnitt des Heizungsträgers 15, der den mit Entwässerungskanal 10 und den Wasserauslassstutzen 11 kommunizierenden Kanal enthält, ist ein O-Ring 28 zur Abdichtung des Heizungsträgers 15 gegenüber dem Deckel 3 gelegt. Zur Verbindung zwischen dem Heizungsträger 15 und dem Wasserauslassstutzen 11 kann am Wasserauslassstutzen 11 und/oder an einem Abschnitt des Heizungsträgers 15 ein Tannenbaumprofil zur festen Verbindung der Bauteile angeordnet sind. Dem Heizungsträger 15 sind somit die Heizelemente, der Wasserauslassstutzen, der Entwässerungskanal sowie die Kontaktpins 23 zugeordnet. Gemeinsam mit dem Wasserstandssensor 22, welcher am Entwässerungskanal 10 angeordnet ist, bilden diese Bauteile ein gemeinsames, vorzufertigendes Modul, welches bei der Montage in den Deckel eingesetzt wird und durch Aufsetzen des Filtergehäuses fixiert wird. Ein Federelement 26 wirkt auf das Filterelement 4 und fixiert so das Modul kraftschlüssig an der Deckelinnenseite. Auf diese Weise werden Bauteil- und Montagetoleranzen in Axialrichtung der Filtereinrichtung ausgeglichen.

In einer alternativen Ausgestaltung wird das vorgefertigte Modul bei der Montage in das Filtergehäuse eingesetzt und durch Aufsetzen des Deckels fixiert.

Sämtliche Anschlüsse erfolgen über die Deckelseite, da sowohl die elektrischen Kontaktpins sowie der Wasserauslassstutzen durch Ausnehmungen im Deckel hindurchragen. Der Fluid-Einlassstutzen 5 und der Fluid-Auslassstutzen 7 sind am Deckel befestigt und kommunizieren durch eine Öffnung mit dem Innenbereich des Filtergehäuses.

Am Heizungsträger 15 ist eine umlaufende Dichtlippe 29 angeformt, die an der Innenseite des Filtergehäuses 2 dichtend anliegt. Eine weitere Dichtlippe 30 ist an einer das zylindrische Filterelement nach oben abschließenden Endscheibe angeformt, die ebenfalls an der Innenseite des Filtergehäuses 2 dichtend anliegt, sich jedoch nicht über den gesamten Umfang erstreckt, sondern ein Winkelsegment freigibt, damit der im Heizungsträger 15 erwärmte Kraftstoff aus dem oberhalb des Filterelements liegenden Bereich nach unten zur Rohseite des Filterelements strömen kann.

Diese Dichtlippen 29, 30 definieren den Strömungsbereich des Kraftstoffes im Bereich des Heizungsträgers. So kann das Fluid nicht an der Heizeinrichtung 6 vorbei an der Filtergehäusewand in den Bereich des Filterelementes 4 strömen. Dabei können die Dichtlippen 29, 30 materialeinheitlich und einstückig mit dem Heizungsträger 15 (Dichtlippe 29) beziehungsweise mit der Endscheibe des Filterelementes 4 (Dichtlippe 30) ausgebildet sein.

In Fig. 1a ist ein Ausschnitt aus dem Kontaktbereich zwischen dem Entwässerungskanal 10 und dem Mittelrohr 24 dargestellt. An der Außenseite des Entwässerungskanals 10 ist eine Dichtlippe 25 angeformt, die in Kontakt mit dem Mittelrohr 24 steht. Auf diese Weise ist eine strömungsdichte Verbindung zwischen Entwässerungskanal 10 und Mittelrohr 24 mit dem Filterelement 4 gegeben, so dass zusätzliche Abdichtungsmaßnahmen wie beispielsweise Dichtringe entfallen können.

Eine derartige Abdichtung mithilfe von angeformten Dichtlippen besteht zweckmäßigerweise auch am Auslassstutzen 7 gegenüber dem Heizungsträger 15 oder einem mit dem Entwässerungskanal verbundenen Bauteil, so dass auch am Auslassstutzen 7 zusätzliche Dichtelemente entfallen können.

In Fig. 2 ist die Heizeinrichtung 6 im eingebauten Zustand in der Filtereinrichtung 1 in vergrößerter Darstellung gezeigt. Die Heizeinrichtung 6 befindet sich axial zwischen der oberen Stirnseite des Filterelementes 4 und der Innenseite des Gehäusedeckels 3. Die Heizeinrichtung 6 umfasst zwei Wärmeleitplatten 13 und 14, die ringförmig ausgebildet sind und zentrisch zu der zentralen Längsachse der Filtereinrichtung 1 angeordnet sind. Die beiden Wärmeleitplatten 13 und 14, die insbesondere aus einem elektrisch leitfähigem Material, vorzugsweise einem Metall bestehen, liegen konzentrisch und im Wesentlichen parallel zueinander und schließen einen zwischenliegenden Fluidraum 17 ein. Beheizt werden die beiden Wärmeleitplatten 13 und 14 von Heizelementen 16, die vorzugsweise zwischen den beiden Wärmeleitplatten 13 und 14 angeordnet sind.

Zur Erwärmung wird das herangeführte Fluid über die Außen- bzw. Innenseite der Wärmeleitplatten 13 und 14 geführt. Zweckmäßigerweise erfolgt die Strömungsführung in der Weise, dass zunächst die dem Heizungsträger 15 zugewandte Außenseite der Wärmeleitplatte 13 von dem Fluid überstrichen wird, welches anschließend in den zwischenliegenden Fluidraum 17 geführt wird. Danach wird die Strömung zu der dem Filterelement 4 zugewandten Außenseite der unteren Wärmeleitplatte 14 geleitet, woraufhin die Strömung axial im Bereich des Filtergehäuses 2 in den Rohraum zwischen der Außenseite des Filterelementes 4 und der Innenseite des topfförmigen Filtergehäuses 2 gelangt.

Der Heizungsträger 15 ist zweckmäßigerweise als Kunststoffbauteil ausgeführt und trägt beide Wärmeleitplatten 13 und 14. Besonders geeignet ist hierzu ein Thermoplastischer Kunststoff mit Glasfüllung, beispielsweise Polyamid PA6 mit Glasfaserfüllung.

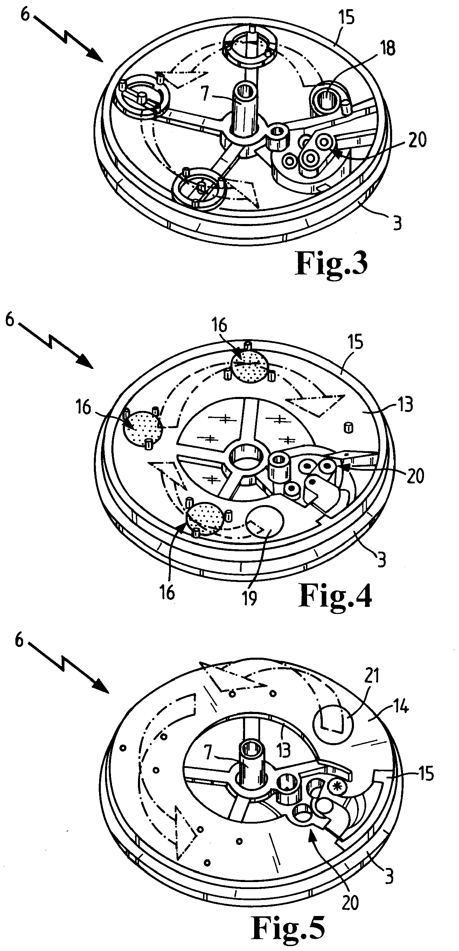

In den Fig. 3 bis 5 ist die Heizeinrichtung 6 in verschiedenen Stadien des Zusammenbaus in einer auf die Innenseite des Deckels 3 gerichteten Perspektive gezeigt. Das Rohfluid strömt zur Erwärmung durch eine Einströmöffnung 18 zur Innenseite des Deckels 3, wobei die Einströmöffnung 18 in den Deckel eingebracht ist und mit dem Einlassstutzen 5 (Fig. 1, 2) kommuniziert. Auf der Innenseite des Deckels 3 befindet sich der Heizungsträger 15, welcher Träger der Wärmeleitplatten ist. Wie mit den Strömungspfeilen angegeben, zirkuliert die Strömung in Umfangsrichtung zunächst zwischen der Innenseite des Deckels 3 und der Außenseite der nächstliegenden Wärmeleitplatte, welche parallel zur Innenseite des Deckels angeordnet ist.

In Fig. 4 ist die Heizeinrichtung 6 mit der ersten Wärmeleitplatte 13 dargestellt, die eine Strömungsöffnung 19 aufweist, durch die das Fluid aus dem Strömungsraum zwischen Innenseite des Deckels und Außenseite der Wärmeleitplatte 13 hindurchströmt. Wie mit den Pfeilen angegeben, kann das Fluid anschließend entgegengesetzt zur Strömung wie in Fig. 3 dargestellt in Umfangsrichtung an der Innenseite der Wärmeleitplatte 13 entlang strömen.

An der Innenseite der Wärmeleitplatte sind außerdem Heizelemente 16 angeordnet, die vorzugsweise als elektrische PTC-Elemente ausgeführt sind und über die die Wärmeleitplatten erwärmt werden. Der Wärmeeintrag erfolgt anschließend von den erwärmten Wärmeleitplatten zu dem an den Seitenflächen der Wärmeleitplatten entlang geführten Fluid. Es sind insgesamt drei über den Umfang verteilte Heizelemente 16 vorgesehen.

Die Wärmeleitplatte 13 ist ebenso wie die Wärmeleitplatte 14 (Fig. 5) ringförmig ausgebildet und weist eine zentrale Ausnehmung auf, durch die beispielsweise der Auslassstutzen 7 für die Ableitung des gereinigten Fluids geführt ist. Außerdem sind die Wärmeleitplatten nicht durchgehend ausgebildet, sondern erstrecken sich nur über ein Winkelsegment von etwa 330°, wobei in dem frei bleibenden Segment Anschlüsse 20 angeordnet sind, welche insbesondere Teil des Anschlussblocks 12 (Fig. 1) sind.

In Fig. 5 ist die Heizeinrichtung 6 im fertig montierten Zustand dargestellt. Die zweite Wärmeleitplatte 14 ist ebenfalls am Heizungsträger 15 montiert und liegt parallel und auf Abstand zu der darunter liegenden ersten Wärmeleitplatte 13. In die zweite Wärmeleitplatte 14 ist eine weitere Strömungsöffnung 21 eingebracht, über die das Fluid aus dem zwischenliegenden Fluidraum zwischen Wärmeleitplatten 13 und 14 hindurchtreten kann, welches anschließend wie mit den Pfeilen dargestellt in Umfangsrichtung über die Außenseite der zweiten Wärmeleitplatte 14 entlang strömt. Danach ist das Fluid erwärmt und kann zur Rohseite des Filterelementes geführt werden.

## Patentansprüche

1. Filtereinrichtung für Fluide, insbesondere für den Kraftstoff einer Brennkraftmaschine, mit einem in einem Filtergehäuse (2) angeordneten Filterelement (4) und mit einer im Strömungsweg des Fluids angeordneten Heizeinrichtung (6), die an der Innenseite eines das Filtergehäuse verschließenden Deckels (3) angeordnet ist, **dadurch gekennzeichnet, dass** die Heizeinrichtung (6) ein Heizelement (16) umfasst, das an einem Heizungsträger (15) gehalten ist, welcher an der Deckelinnenseite angeordnet ist, wobei einteilig mit dem Heizungsträger (15) ein Wasserauslassstutzen (11) ausgebildet ist, der durch eine Ausnehmung im Deckel (3) nach außen geführt ist, wobei der Wasserauslassstutzen (11) mit einem Entwässerungskanal (10) im Filtergehäuse (2) kommuniziert, der mit dem Heizungsträger (15) verbunden ist.

2. Filtereinrichtung nach Anspruch 1, **dadurch gekennzeichnet, dass** zumindest ein elektrischer Kontaktpin (23) mit dem Heizungsträger (15) verbunden und durch eine Ausnehmung im Deckel (3) hindurchgeführt ist.

3. Filtereinrichtung nach Anspruch 2, **dadurch gekennzeichnet, dass** ein Kontaktpin (23) mit einem Wasserstandssensor (22) verbunden ist, der im Filtergehäuse (2) angeordnet ist.

4. Filtereinrichtung nach Anspruch 3, **dadurch gekennzeichnet, dass** der Wasserstandssensor (22) im oder am Entwässerungskanal (10) angeordnet ist.

5. Filtereinrichtung nach einem der Ansprüche 1 bis 4, **dadurch gekennzeichnet, dass** der Heizungsträger (15) als Kunststoffteil ausgeführt ist.

6. Filtereinrichtung nach einem der Ansprüche 1 bis 5, **dadurch gekennzeichnet, dass** am Entwässerungskanal (10) Dichtlippen (25) angeformt sind, die mit einem das Filterelement (4) tragenden Mittelrohr (24) in Dichtkontakt stehen.

7. Filtereinrichtung nach einem der Ansprüche 1 bis 6, **dadurch gekennzeichnet, dass** am Auslassstutzen (7) Dichtlippen zur Abdichtung gegenüber dem Heizungsträger (15) oder einem mit dem Entwässerungskanal (10) verbundenen Bauteil angeformt sind.

8. Filtereinrichtung nach einem der Ansprüche 1 bis 7, **dadurch gekennzeichnet, dass** ein Fluid-Eintrittsstutzen (5) und ein Fluid-Austrittsstutzen (7) mit dem Heizungsträger (15) verbunden und durch Ausnehmungen im Deckel (3) hindurchgeführt sind.

9. Filtereinrichtung nach einem der Ansprüche 1 bis 8, **dadurch gekennzeichnet, dass** die Heizeinrichtung (6) mindestens eine Wärmeleitplatte (13, 14) sowie mindestens ein Heizelement (16) umfasst, wobei die Wärmeleitplatte (13, 14) von dem Heizelement (16) beheizbar und das zu erwärmende Fluid an der Wärmeleitplatte (13, 14) entlang geführt ist.

10. Filtereinrichtung nach Anspruch 9, **dadurch gekennzeichnet, dass** mindestens zwei Wärmeleitplatten (13, 14) vorgesehen sind, die einen zwischenliegenden Fluidraum (17) begrenzen.

11. Filtereinrichtung nach Anspruch 9 oder 10, **dadurch gekennzeichnet, dass** das Heizelement (16) zwischen den Wärmeleitplatten (13, 14) angeordnet ist.

12. Filtereinrichtung nach einem der Ansprüche 9 bis 11, **dadurch gekennzeichnet, dass** die Wärmeleitplatte (13, 14) elektrisch leitfähig und Teil des Stromkreislaufs zum Erwärmen des Heizelements (16) ist.

13. Filtereinrichtung nach einem der Ansprüche 1 bis 12, **dadurch gekennzeichnet, dass** das Filterelement (4) hohlzylindrisch ausgebildet und in Radialrichtung von dem Fluid zu durchströmen ist.

14. Filtereinrichtung nach einem der Ansprüche 1 bis 13, **dadurch gekennzeichnet, dass** der Deckel (3) fest mit dem Filtergehäuse (2) verbunden ist, beispielsweise durch Umbördeln des Deckelrands.
